# EUROPEAN PATENT APPLICATION

(11) **EP 3 901 436 A1**
(43) Date of publication of application: **27.10.2021**
(21) Application number: 21161665.1
(22) Date of filing: 10.03.2021
(51) Int. Cl.: F02B 37/04, F02B 29/04

(54) **ENGINE INTAKE STRUCTURE, ENGINE, AND VEHICLE**

(30) Priority: 22.04.2020 JP 2020076102
(71) Applicant: MAZDA MOTOR CORPORATION, Hiroshima 730-8670 (JP)
(72) Inventor: SUGIMOTO, Manabu, Fuchu-cho, Aki-gun,, Hiroshima 730-8670 (JP)
(74) Representative: Müller-Boré & Partner Patentanwälte PartG mbB

(57) **Abstract**

A manifold has a first bypass side introduction opening that is connected to a first cooler bypass passage branched from a turbo downstream passage and introduces the intake air bypassing a cooler from a turbocharger and a second bypass side introduction opening that is connected to a second cooler bypass passage branched from an electric downstream passage and introduces the intake air bypassing the cooler from an electric supercharger. The cooler and the manifold vertically overlap with each other on the intake side of an engine block. The electric supercharger is disposed below the cooler with the manifold sandwiched therebetween. The first bypass side introduction opening opens to one side in a cylinder row direction. The second bypass side introduction opening opens downward.

## Description

### [Technical Field]

The present invention relates to an engine intake structure having a turbocharger driven by exhaust energy and an electric supercharger driven by electric energy. The present invention also relates to an engine and a vehicle.

### [Background Art]

An example of such an engine intake structure is described in patent document 1. In this intake structure, a turbocharger is provided on the exhaust side of an engine block, a surge tank and an intercooler are provided on the intake side of the engine block, and an electric supercharger is disposed below the intercooler.

The intake passage extending from the turbocharger on the exhaust side to the intake side is branched behind the intercooler. One of the branched passages is connected to the inlet on the back surface of the intercooler. The other of the branched passages extends to a portion below the intercooler and is connected to the electric supercharger. The passage through which intake air is introduced into the inlet of the intercooler from the electric supercharger is provided below the intercooler. The passage through which intake air is introduced into the surge tank from the outlet on the front surface of the intercooler is provided in front of the intercooler.

### [Prior Art Documents]

### [Patent documents]

[Patent document 1] JP-A-2020-2798

### [Summary]

### [Problem to be solved]

By the way, depending on the combustion state of the engine, the intake air pressurized by the supercharger may be desirably introduced into the cylinders of the engine without being cooled by the intercooler. In this case, it is necessary to provide a bypass passage that introduces the intake air to the cylinders of the engine without passing through the intercooler from the supercharger by bypassing the intercooler. However, the layout of a new bypass passage is difficult in the structure in which the intake passages are present behind, below, and in front of the intercooler as in patent document 1.

For example, the passage may be extended to the outlet side on the front surface of the intercooler through the outer side of the intercooler. In that case, however, the bypass passage significantly overhangs laterally from the engine.

If the bypass passage significantly overhangs laterally from the engine, the bypass passage may interfere with the wall portion of the engine room or components such as the engine mount. In particular, when passages that bypass the intercooler are provided for both the turbocharger and the electric supercharger, a plurality of bypass passages needs to be disposed between the side surface of the intake side of the engine and the wall portion of the engine room and the bypass passages tend to interfere with the wall portion and components described above.

An object of the present invention is to provide a plurality of bypass passages that guide the intake air from the turbocharger and the electric supercharger to the cylinders of the engine while bypassing the intercooler in a compact form so that the bypass passages do not significantly overhang laterally from the engine.

### [Means for solving the Problem]

An engine intake structure disclosed herein includes a turbocharger provided on an exhaust side of a multi-cylinder engine block; an electric supercharger provided on an intake side of the engine block; an intercooler provided on the intake side of the engine block; a surge tank connected to a plurality of cylinders provided in parallel in the engine block via an independent intake passage; a manifold that guides intake air passing through the intercooler and intake air bypassing the intercooler to the surge tank; a first cooler bypass passage that is branched from a turbo downstream passage and is configured to guide intake air to the manifold while bypassing the intercooler, the first cooler bypass passage being configured to guide intake air from the turbocharger to the intercooler; and a second cooler bypass passage that is branched from an electric downstream passage and is configured to guide the intake air to the manifold while bypassing the intercooler, the electric downstream passage is configured to guide the intake air from the electric supercharger to the intercooler. The manifold has a cooler side introduction opening to which a cooler downstream passage that guides the intake air from the intercooler to the manifold is connected, a first bypass side introduction opening to which the first cooler bypass passage is connected, a second bypass side introduction opening to which the second cooler bypass passage is connected, and a tank side outflow opening connected to the surge tank. The intercooler and the manifold are disposed so that at least parts of the intercooler and the manifold vertically overlap with each other on the intake side of the engine block. The electric supercharger is disposed on one side in a vertical direction of the intercooler with the manifold sandwiched therebetween on the intake side of the engine block. The first bypass side introduction opening opens to one side in a cylinder row direction of the engine block. The second bypass side introduction opening opens to one side in the vertical direction.

In this intake structure, the intercooler, the manifold, and the electric supercharger are stacked vertically in three layers on the intake side of the engine block with the manifold disposed in the middle. Accordingly, the intercooler, the manifold, and the electric supercharger are advantageously prevented from significantly overhanging laterally from the engine block.

In addition, in short, the first bypass side introduction opening of the manifold opens to one side in the cylinder row direction in this intake structure. The second bypass side introduction opening of the manifold opens to one side in the vertical direction in which the electric supercharger is disposed. This can easily extend the second cooler bypass passage toward one side in the vertical direction of the manifold and extend the first cooler bypass passage toward one side in the cylinder row direction of the manifold. Accordingly, the first cooler bypass passage and the second cooler bypass passage can be extended without intersecting each other on the intake side of the engine block. That is, the first cooler bypass passage and the second cooler bypass passage can be provided compactly without significantly overhanging laterally from the engine block.

Accordingly, even when the plurality of bypass passages (the first cooler bypass passage and the second cooler bypass passage) is extended on the intake side of the engine block, these bypass passages are advantageously prevented from interfering with the wall portion of the engine room or components such as the engine mount.

In one embodiment, the surge tank is disposed between a side surface on the intake side of the engine block and the manifold. Particularly, the tank side outflow opening opens to the surge tank.

According to this structure, by using the upper side or the lower side of the intercooler to dispose the manifold and the surge tank and directly connecting the manifold to the surge tank, both the manifold and the surge tank can be disposed compactly on the side of the engine block.

In one embodiment, the electric downstream passage and the second cooler bypass passage are arranged in the cylinder row direction.

According to this structure, the electric downstream passage and the second cooler bypass passage are advantageously prevented from significantly overhanging laterally from the engine block.

In one embodiment, the electric downstream passage has a cooler side vertical extension portion that extends in the vertical direction. Particularly, the second cooler bypass passage has a bypass side vertical extension portion that extends in the vertical direction. Further particularly, the cooler side vertical extension portion and the bypass side vertical extension portion are arranged in the cylinder row direction.

According to this structure, since the cooler side vertical extension portion and the bypass side vertical extension portion extend along the side surface on the intake side of the engine block, the electric downstream passage and the second cooler bypass passage are more advantageously prevented from significantly overhanging laterally from the engine block.

In one embodiment, the cooler side vertical extension portion and the bypass side vertical extension portion are disposed so that at least parts thereof overlap with each other as seen in the cylinder row direction.

According to this structure, the electric downstream passage and the second cooler bypass passage are more advantageously prevented from significantly overhanging laterally from the engine block.

In one embodiment, the electric downstream passage has a horizontal extension portion that extends in the cylinder row direction from the electric supercharger and is connected to the cooler side vertical extension portion. Particularly, the bypass side vertical extension portion is branched from the horizontal extension portion.

According to this structure, the horizontal extension portion extending in the cylinder row direction makes the electric downstream passage and the second cooler bypass passage to be easily arranged in the cylinder row direction.

In one embodiment, the electric supercharger is disposed below the intercooler with the manifold sandwiched therebetween on the intake side of the engine block. Particularly, a passage from the turbocharger to the electric supercharger extends from the exhaust side to the intake side above the engine block on one side in the cylinder row direction of the intercooler, extends downward on the one side in the cylinder row direction of the intercooler, and extends toward the other side in the cylinder row direction toward the electric supercharger.

According to this structure, the passage from the turbocharger to the electric supercharger extends along the side surface on the intake side of the engine block on the intake side of the engine block. Accordingly, the passage from the turbocharger to the electric supercharger is advantageously prevented from significantly overhanging laterally from the engine block. Accordingly, the entire intake passage of the engine is advantageously made more compact.

The engine block is disposed longitudinally in which the cylinder row direction coincides with a front and rear direction of a vehicle.

When the engine block is disposed longitudinally, the space between the side surface on the intake side of the engine block and the wall portion of the engine room, specifically the space between the side surface on the intake side of the engine block and the side wall in the vehicle width direction is often narrower than when the engine block is disposed transversely. In addition, components such as the engine mount are often disposed between the side surface on the intake side of the engine block and the side wall in the vehicle width direction of the engine room. That is, in the longitudinal engine, the plurality of bypass passages (the first cooler bypass passage and the second cooler bypass passage) needs to be provided without significantly overhanging laterally from the engine block (that is, the outer side in the vehicle width direction) to suppress interference with the side wall, the components, and the like as compared with the transverse engine.

Accordingly, by adopting the intake structure described above, the first cooler bypass passage and the second cooler bypass passage can be provided compactly without significantly overhanging to the outer side in the vehicle width direction. Accordingly, even when the engine block is disposed longitudinally and the space between the side surface on the intake side of the engine block and the side wall in the vehicle width direction of the engine room is narrowed, the plurality of bypass passages (the first cooler bypass passage and the second cooler bypass passage) can be easily provided on the intake side of the engine block.

Particularly, an engine including a multi-cylinder engine block and the above engine intake structure is also provided.

Further particularly, the engine is an in-line multi-cylinder engine.

Further particularly, a vehicle including the above engine is also provided.

Further particularly, the cylinder row direction (D) coincides with a front and rear direction of the vehicle.

Further particularly, the first bypass side introduction opening is configured to open rearward in the front and rear direction of the vehicle.

Further particularly, a cylinder axis direction of the cylinder block coincides with a vertical direction.

Further particularly, the second bypass side introduction opening (43) is configured to open downward.

### [Advantage]

According to the present invention, the plurality of bypass passages that guide the intake air from the turbocharger and the electric supercharger to the cylinders of the engine while bypassing the intercooler can be provided compactly without significantly overhanging laterally from the engine.

### [Brief Description of the Drawings]

[Fig. 1] Fig. 1 is an overall structure diagram of an engine.
[Fig. 2] Fig. 2 is a perspective view as seen from above and illustrates the engine in which some components are omitted.
[Fig. 3] Fig. 3 is a front view as seen from the front and illustrates the engine in which some components are omitted.
[Fig. 4] Fig. 4 is a side view as seen from the intake side and illustrates the engine.
[Fig. 5] Fig. 5 is a plan view illustrating a surge tank and a manifold.
[Fig. 6] Fig. 6 is a horizontal sectional view illustrating the surge tank and the manifold.
[Fig. 7] Fig. 7 is a side view as seen from the intake side of the engine and illustrates the relationship between the manifold and an intercooler.
[Fig. 8] Fig. 8 is a rear view as seen from the rear side and illustrates the equipment on the engine intake side.
[Fig. 9] Fig. 9 is a rear view as seen from the rear side and illustrates the equipment on the engine intake side from which a branch pipe and a fuel pump have been removed.

### [Modes for Carrying Out the Invention]

Embodiments of the present invention will be described below with reference to the drawings. The description of the following preferred embodiments is an example and is not intended to limit the present invention, applications thereof, or uses thereof. Accordingly, all of the features as shown in the drawings may not necessarily essential.

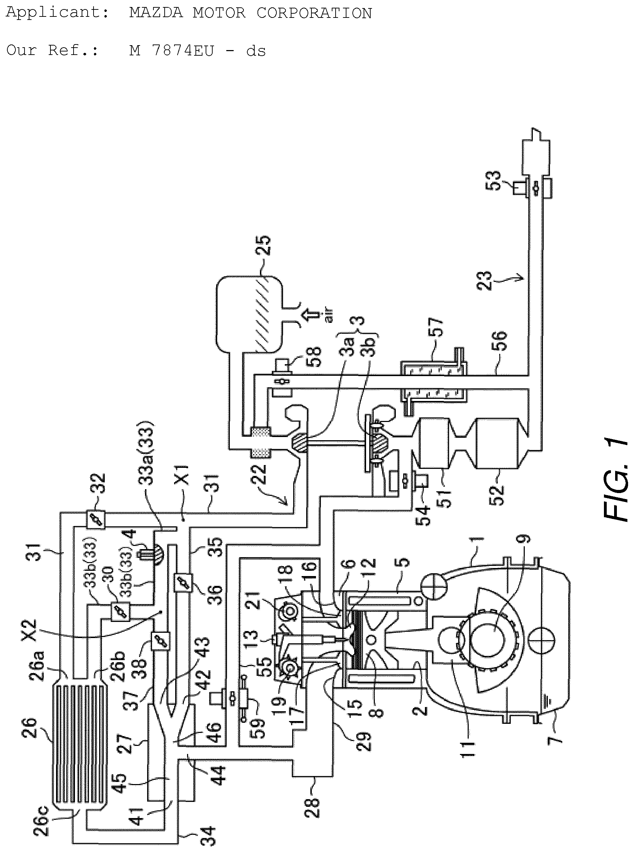

The embodiment relates to the intake structure of an engine, particularly a diesel engine. In the overall structure of the engine illustrated in Fig. 1, reference numeral 1 particularly represents an in-line multi-cylinder engine block having a plurality of cylinders 2 (particularly two, three, four, five or six cylinders) disposed in series. It should be noted here that Fig. 1 illustrates the engine block 1 in cross-sectional view, so only one of the cylinders 2 is represented. The engine block 1 is mounted in the engine compartment in the front portion of the vehicle with the cylinder row aligned with, for example, in the vehicle front and rear direction. That is, the engine block 1 is disposed longitudinally so that the cylinder row direction coincides with the vehicle front and rear direction. This engine has a turbocharger 3 driven by exhaust energy and an electric supercharger 4 driven by electric energy. Particularly, the electric supercharger 4 is driven by an electric motor. Further particularly, the cylinder axis of the cylinder 2 coincides with the vertical direction when the engine is mounted on the vehicle.

### (About the engine block 1)

The engine block 1 includes a cylinder block 5, a cylinder head 6 mounted on the upper surface of the cylinder block 5, and an oil pan 7 mounted on the bottom surface of the cylinder block 5. The plurality of cylinders 2 arranged in a single row is formed in the upper portion of the cylinder block 5. Pistons 8 are inserted into the cylinders 2. A crankshaft 9 is provided in the lower portion of the cylinder block 5. The crankshaft 9 is coupled to the pistons 8 via connecting rods 11. A combustion chamber 12 is formed at the top of the piston 8. Injectors 13 that inject fuel into the combustion chambers 12 are provided in the cylinder head 6.

In the cylinder head 6, the intake ports 15 and the exhaust ports 16 are provided so as to face each other in the width direction (the direction orthogonal to the cylinder row direction) of the engine block 1. The cylinder head 6 is provided with intake valves 17, which open and/or close the intake openings (the openings of the intake ports 15 close to the cylinders 2), exhaust valves 18, which open and/or close the exhaust openings (the openings of the exhaust ports 16 close to the cylinders 2), valve mechanisms 19 for driving the intake valves 17, and valve mechanisms 21 for driving the exhaust valves 18. An intake passage 22 through which intake air is introduced into the cylinders 2 is connected to the intake ports 15. An exhaust passage 23 through which exhaust air discharged from the cylinders 2 is processed and used is connected to the exhaust ports 16.

### (About the intake passage 22)

The intake passage 22 is provided with, in the order from the upstream side to the downstream side, an air cleaner 25, a compressor 3a of the turbocharger 3, the electric supercharger 4, an intercooler 26, a manifold 27, and particularly a surge tank 28.

The air cleaner 25 prevents dust in the air from being sucked into the cylinders 2. The turbocharger 3 pressurizes (compresses) the intake air using exhaust energy and introduces the pressurized intake air into the cylinders 2. The electric supercharger 4 pressurizes (compresses) the intake air using electric energy and introduces the pressurized intake air into the cylinders 2. The intercooler 26 cools the intake air pressurized by the superchargers 3 and 4 as needed. In the embodiment, the intercooler 26 is a water-cooled cooler.

The manifold 27 is a multi-branch pipe. The manifold 27 guides the intake air passing through the intercooler 26 and the intake air bypassing the intercooler 26 to the surge tank 28. The surge tank 28 provides stable intake air for the cylinders 2. Intake passages 29, which are independent of each other, extend from the surge tank 28 to the intake ports 15 of the individual cylinders 2.

Next, the intake passages from the turbocharger 3 to the surge tank 28 will be described.

A turbo downstream passage 31 extends from the outlet of the compressor 3a of the turbocharger 3. The turbo downstream passage 31 guides intake air from the turbocharger 3 to the intercooler 26. Specifically, the turbo downstream passage 31 guides the intake air pressurized by the turbocharger 3 from the outlet of the compressor 3a of the turbocharger 3 to the intercooler 26. The downstream end of the turbo downstream passage 31 is connected to the first intake inflow opening 26a of the intercooler 26. The cooler side first flow rate regulating valve 32 is provided in the turbo downstream passage 31.

The cooler downstream passage 34 extends from an intake outflow opening 26c of the intercooler 26. The cooler downstream passage 34 guides the intake air from the intercooler 26 to the manifold 27.

A first cooler bypass passage 35 is branched from the portion of the turbo downstream passage 31 on the upstream side of (or upstream of) the flow control valve 32. The first cooler bypass passage 35 guides the intake air to the manifold 27 while bypassing the intercooler 26. In Fig. 1 and the like, X1 (referred to below as a "first branch portion X1") represents the portion of the turbo downstream passage 31 from which the first cooler bypass passage 35 is branched. A bypass side first flow rate regulating valve 36 is particularly provided in the first cooler bypass passage 35. Specifically, the bypass side first flow rate regulating valve 36 is provided in the portion of the first cooler bypass passage 35 on the downstream side of the first branch portion X1. The bypass side first flow rate regulating valve 36 regulates the flow rate of the intake air flowing through the first cooler bypass passage 35.

An electric supercharging passage 33 is branched from the portion of the first cooler bypass passage 35 on the downstream side of (or downstream of) the first branch portion X1 and on the upstream side of the bypass side first flow rate regulating valve 36. The electric supercharging passage 33 guides the intake air pressurized by the electric supercharger 4 to the intercooler 26. The electric supercharger 4 is provided in the electric supercharging passage 33. The downstream end of the electric supercharging passage 33 is connected to a second intake inflow opening 26b of the intercooler 26.

The electric supercharging passage 33 has an electric upstream passage 33a on the upstream side of the electric supercharger 4 and an electric downstream passage 33b on the downstream side of the electric supercharger 4. That is, the electric upstream passage 33a guides the intake air from the turbocharger 3 to the electric supercharger 4. The electric downstream passage 33b guides the intake air from the electric supercharger 4 to the intercooler 26. A cooler side second flow rate regulating valve 30 is particularly provided in the electric downstream passage 33b. A second cooler bypass passage 37 is branched from the portion (that is, the electric downstream passage 33b) of the electric supercharging passage 33 on the downstream side of (or downstream of) the electric supercharger 4. Specifically, the second cooler bypass passage 37 is branched from the portion of the electric downstream passage 33b on the upstream side of (or upstream of) the cooler side second flow rate regulating valve 30. The second cooler bypass passage 37 guides the intake air to the manifold 27 while bypassing the intercooler 26. In Fig. 1 and the like, X2 (referred to below as a "second branch portion X2") represents the portion of the electric downstream passage 33b from which the second cooler bypass passage 37 is branched. A bypass side second flow rate regulating valve 38 is particularly provided in the second cooler bypass passage 37. Specifically, the bypass side second flow rate regulating valve 38 is provided in the portion of the second cooler bypass passage 37 on the downstream side of the second branch portion X2. The bypass side second flow rate regulating valve 38 regulates the flow rate of the intake air flowing through the second cooler bypass passage 37.

### (About the manifold 27)

The manifold 27 is particularly provided between the cooler downstream passage 34, the cooler bypass passages 35 and 37, and the surge tank 28. The manifold 27 connects the cooler downstream passage 34 and the cooler bypass passages 35 and 37 to the surge tank 28. That is, the manifold 27 has a cooler side introduction opening 41 to which the cooler downstream passage 34 is connected, a first bypass side introduction opening 42 to which the first cooler bypass passage 35 is connected, a second bypass side introduction opening 43 to which the second cooler bypass passage 37 is connected, and a tank side outflow opening 44 connected to the surge tank 28.

In the manifold 27, the cooler side passage 45 extending from the cooler side introduction opening 41 and the bypass side passage 46 extending from the bypass side introduction openings 42 and 43 particularly intersect with each other and the tank side outflow opening 44 that opens to the surge tank 28 is provided at the intersection point. The openings at the upstream ends of the branching passages that branch into two on the upstream side of the bypass side passage 46 are the first the bypass side introduction opening 42 and the second bypass side introduction opening 43.

Accordingly, the intake air passing through the intercooler 26 is guided from the cooler downstream passage 34 to the cooler side introduction opening 41 of the manifold 27, passes through the cooler side passage 45, and is guided from the tank side outflow opening 44 to the surge tank 28. The intake air bypassing the intercooler 26 is guided from the cooler bypass passages 35 and 37 to the bypass side introduction openings 42 and 43 of the manifold 27, passes through the bypass side passage 46, and is guided from the tank side outflow opening 44 to the surge tank 28.

### (About the exhaust passage 23)

The exhaust passage 23 is particularly provided with, in the order from the upstream side to the downstream side, a turbine 3b of the turbocharger 3, a DOC (diesel oxidation catalyst) 51, a DPF (diesel particulate filter) 52, and an exhaust shutter valve 53. The DOC 51, the DPF 52, and the exhaust shutter valve 53 may not be essential to the invention. The exhaust passage 23 has a passage that bypasses the turbine 3b and a wastegate valve 54 is provided in this passage. On the downstream side of the DPF 52, a catalyst (for example, a urea SCR (selective catalytic reduction) for purifying NOx (nitrogen oxides) in exhaust gas) and a slip catalyst for oxidizing the excess ammonia flowing out of the urea SCR may be provided as appropriate. The wastegate valve 54 is opened under conditions where the supercharging pressure by the turbocharger 3 exceeds the upper limit and is fully closed in the other cases.

### (About EGR (exhaust gas recirculation))

The engine particularly has a high-pressure EGR passage 55 that introduces part of exhaust gas from the portion of the exhaust passage 23 on the upstream side of the turbine 3b of the turbocharger 3 as EGR gas into the portion of the intake passage 22 on the downstream side of the manifold 27 and/or a low-pressure EGR passage 56 that introduces part of exhaust gas from the portion of the exhaust passage 23 on the downstream side of the DPF 52 as EGR gas into the portion of the intake passage 22 on the upstream side of the compressor 3a of the turbocharger 3. The EGR passages 55 and 56 may not be essential to the invention. The low-pressure EGR passage 56 is provided with an EGR cooler 57 that cools the EGR gas introduced into the intake passage 22 and an EGR valve 58 that adjusts the EGR amount. The high-pressure EGR passage 55 is also provided with an EGR valve 59 and an EGR cooler (not illustrated).

### (Disposition of intake system components and engine auxiliary devices)

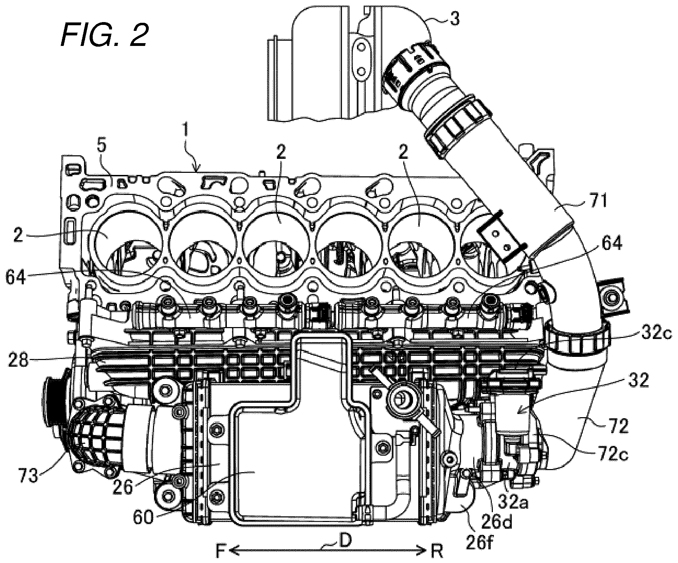

As illustrated in Fig. 2, the turbocharger 3 is disposed on the exhaust side (referred to below as the "engine exhaust side") to which the exhaust port 16 (not illustrated in Fig. 2) of the engine block 1 opens. The intercooler 26 is disposed on the intake side (referred to below as the "engine intake side") to which the intake port 15 (not illustrated in Fig. 2) of the engine block 1 opens. In this embodiment, the exhaust side may be the right side and the intake side may be left side when the engine is mounted in the vehicle. A water tank 60 for cooling the intake air is provided above the intercooler 26. It should be noted here that the cylinder head 6 has been removed from the engine block 1 in Fig. 2.

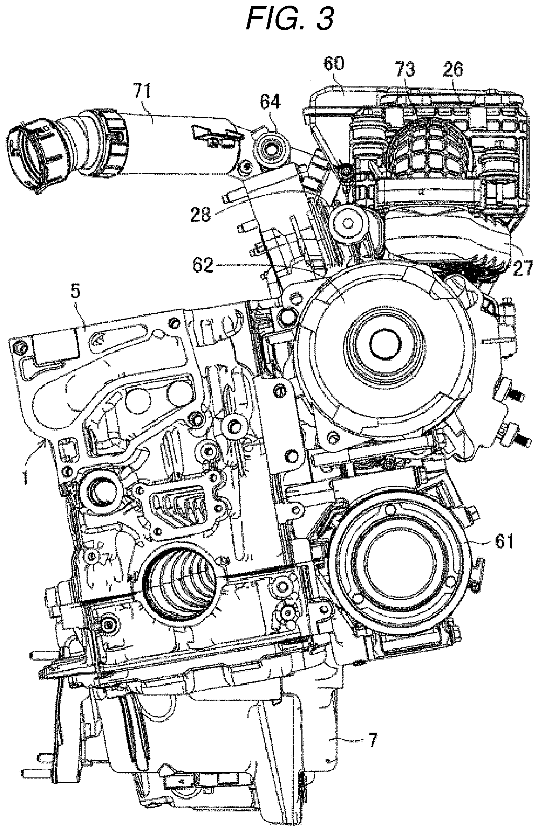

As illustrated in Fig. 3, the intercooler 26 is disposed at a relatively high point on the engine intake side. As illustrated in Fig. 3, on the engine intake side, an air compressor 61 is particularly disposed on the lower side (or the lower portion, specifically on the intake side at the lower portion) of the front side of the cylinder block 5. An alternator 62 is particularly disposed above the air compressor 61. The intercooler 26 is disposed at a position higher than the alternator 62.

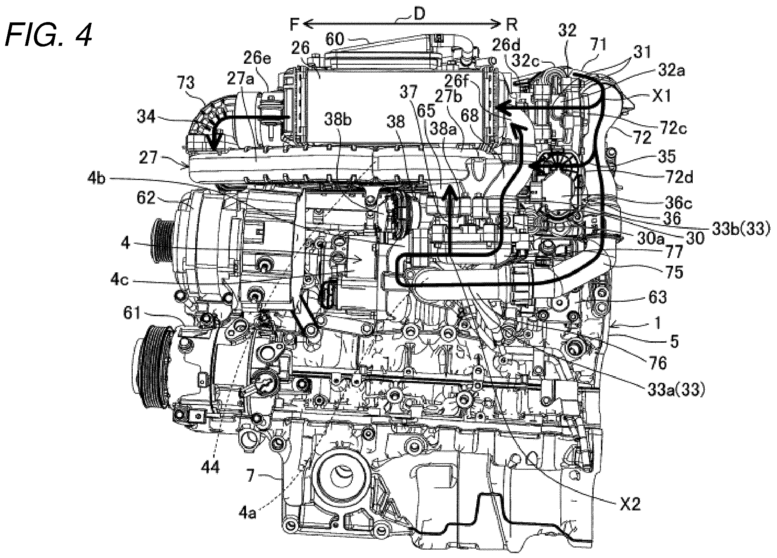

In Fig. 2 and the like, D represents the cylinder row direction of the engine block 1 (i.e., an axial direction of a crank shaft of the engine). As illustrated in Figs. 2 and 4, the intercooler 26 extends in the cylinder row direction D along the upper side surface (or the upper portion of the side surface) on the intake side of the engine block 1. In Fig. 2 and the like, symbol F represents the front side (vehicle front side) in the cylinder row direction D and symbol R represents the rear side (vehicle rear side) in the cylinder row direction D. The intake inflow openings 26a and 26b particularly open to one side (rear side R) in the cylinder row direction D of the intercooler 26. The intake outflow opening 26c particularly opens to the other side (front side F) in the cylinder row direction D of the intercooler 26. It should be noted here that the intake inflow openings 26a and 26b and the intake outflow opening 26c are not illustrated in Figs. 2 and 4.

As illustrated in Fig. 4, the manifold 27 is disposed below the intercooler 26. That is, the manifold 27 is disposed between the intercooler 26 and the alternator 62, particularly in the vertical direction. As described above, the manifold 27 connects the cooler downstream passage 34 and the cooler bypass passages 35 and 37 to the surge tank 28. The intercooler 26 and the manifold 27 are provided so that at least parts thereof vertically overlap with each other on the intake side of the engine block 1. In the embodiment, the front end portion of the manifold 27 projects only forward from the intercooler 26. That is, as illustrated in Fig. 2, the manifold 27 does not project laterally (direction away from the side surface of the engine block 1) from the intercooler 26 in plan view.

As illustrated in Fig. 4, the electric supercharger 4 is disposed on the intake side of the engine block 1. Specifically, the electric supercharger 4 is disposed on the lower side of the manifold 27. That is, the electric supercharger 4 is disposed on the lower side (one side in the vertical direction) on the lower side of the intercooler 26 with the manifold 27 sandwiched therebetween on the intake side of the engine block 1. The electric supercharger 4 is disposed behind the alternator 62. A fuel pump 63 is particularly provided behind the electric supercharger 4. The fuel pump 63 sends fuel to the common rail 64 (see Fig. 2), which distributes the fuel to the individual cylinders 2.

### (About the manifold 27 and the surge tank 28)

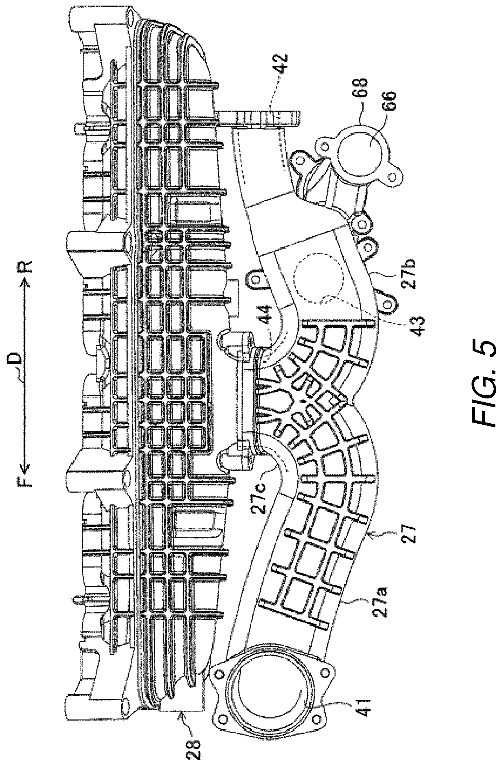

As illustrated in Fig. 5 (plan view), the manifold 27 extends approximately in the cylinder row direction D. The surge tank 28 is disposed between the manifold 27 and the side surface on the intake side of the cylinder head 6 (see Fig. 1) of the engine block 1.

The manifold 27 particularly includes a cooler side pipe portion 27a having the cooler side introduction opening 41, a bypass side pipe portion 27b having the bypass side introduction openings 42 and 43, and a tank side pipe section 27c having the tank side outflow opening 44.

The cooler side pipe portion 27a particularly has the cooler side introduction opening 41 at the other end (the front side F) in the cylinder row direction D and extends toward the rear side R in the cylinder row direction D. The bypass side pipe portion 27b has the first bypass side introduction opening 42 at one end (the rear side R) in the cylinder row direction D and extends to the front side F in the cylinder row direction D. The cooler side pipe portion 27a and the bypass side pipe portion 27b intersect with each other and continue to the bypass side pipe portion 27c that leads to the surge tank 28.

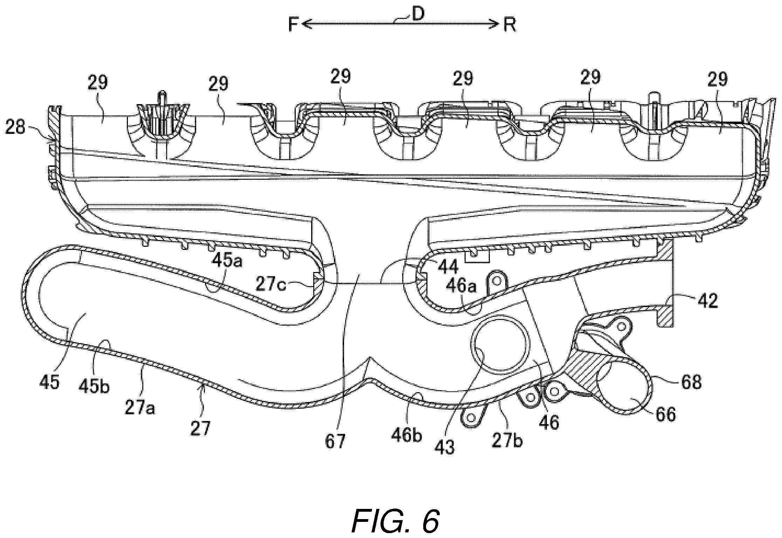

As illustrated in Fig. 5, the cooler side introduction opening 41 opens upward. As illustrated in Fig. 6 (horizontal sectional view), the first bypass side introduction opening 42 opens to one side (that is, the rear side R) in the cylinder row direction D. The tank side outflow opening 44 is disposed at a position near the middle in the cylinder row direction D of the manifold 27. The tank side outflow opening 44 opens to the surge tank 28 at a position near the middle in the cylinder row direction D of the manifold 27. It should be noted here that the position near the middle refers to the middle or the vicinity of the middle.

The cooler side passage 45 from the cooler side introduction opening 41 to the tank side outflow opening 44 formed in the cooler side pipe portion 27a is particularly separated from the surge tank 28 (engine block 1) as approaching the rear side R in the cylinder row direction D from the cooler side introduction opening 41 to the side, and extends to the tank side outflow opening 44 while being curved toward the side. That is, the inner side surface (the surface close to the surge tank 28) 45a and the outer side surface (the surface away from the surge tank 28) 45b of the cooler side passage 45 are curved toward the side described above.

The bypass side passage 46 from the first bypass side introduction opening 42 formed in the bypass side pipe portion 27b to the tank side outflow opening 44 is particularly separated from the surge tank 28 (the engine block 1) to the side as approaching the front side F in the cylinder row direction D from the first bypass side introduction opening 42, and extends to the tank side outflow opening 44 while being curved toward the side. That is, the inner side surface (the surface close to the surge tank 28) 46a and the outer side surface (the surface away from the surge tank 28) 46b of the bypass side passage 46 are curved toward the side described above. However, the passage width of the bypass side passage 46 gradually expands from a small portion to a large portion on the way from the first bypass side introduction opening 42 toward the front side F.

Particularly, the cooler side passage 45 and the bypass side passage 46 diagonally intersect with each other near the middle in the cylinder row direction D of the manifold 27 and reach the tank side outflow opening 44.

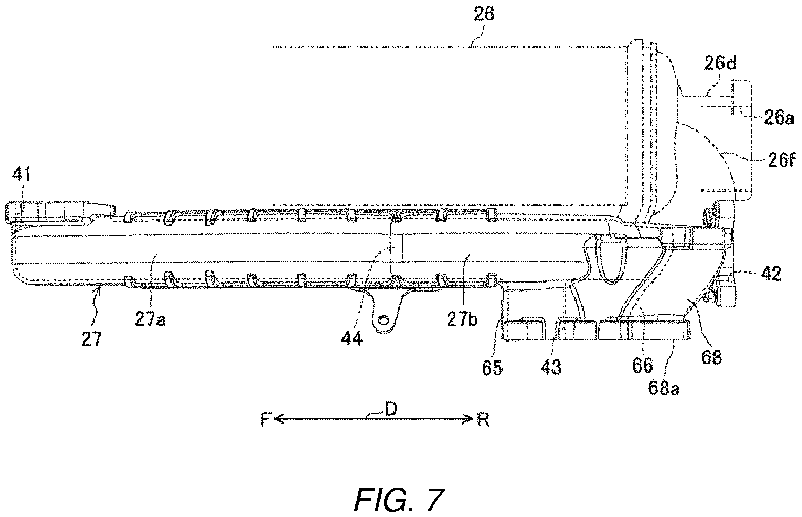

As illustrated in Fig. 7, the bypass side pipe portion 27b is particularly provided with a projecting portion 65 projecting downward. At the lower end of the projecting portion 65, the second bypass side introduction opening 43 opens downward (toward one side in the vertical direction).

The passage extending upward in the projecting portion 65 from the second bypass side introduction opening 43 is connected to the bypass side passage 46 as illustrated in Fig. 6.

Accordingly, the inflow directions of the intake air from the cooler bypass passages 35 and 37 to the bypass side passage 46 of the manifold 27 are as follows. The intake air passing through the first cooler bypass passage 35 flows into the bypass side passage 46 in the cylinder row direction D through the first bypass side introduction opening 42. The intake air passing through the second cooler bypass passage 37 flows into the bypass side passage 46 in the vertical direction through the second bypass side introduction opening 43.

As illustrated in Figs. 6 and 7, a passage forming portion 68 for electric supercharging is particularly provided in the portion of the bypass side pipe portion 27b closer to the rear end in the cylinder row direction D than the second bypass side introduction opening 43. An independent passage 66 vertically penetrating through a passage forming portion 68 is formed in the passage forming portion 68. The independent passage 66 is a part of the electric supercharging passage 33 (the electric downstream passage 33b) and does not communicate with the bypass side passage 46, which will be described later.

As illustrated in Figs. 5 and 6, the surge tank 28 particularly extends in the cylinder row direction D. An intake air introduction opening 67 that opens to the manifold 27 is provided near the center of the surge tank 28. The tank side outflow opening 44 of the tank side pipe portion 27c is directly connected to this intake air introduction opening 67. The plurality of independent intake passages 29 is provided in the portion of the surge tank 28 close to the engine block 1. The individual independent intake passages 29 are connected to the individual cylinders 2 of the engine block 1 via the intake ports 15 (see Fig. 1).

### (About the turbo downstream passage 31)

As illustrated in Fig. 2, a turbo downstream pipe 71 particularly extends from the turbocharger 3. The turbo downstream pipe 71 particularly passes above the rear portion in the cylinder row direction D of the engine block 1 and extends toward a rear position in the cylinder row direction D of the intercooler 26 and on the engine intake side.

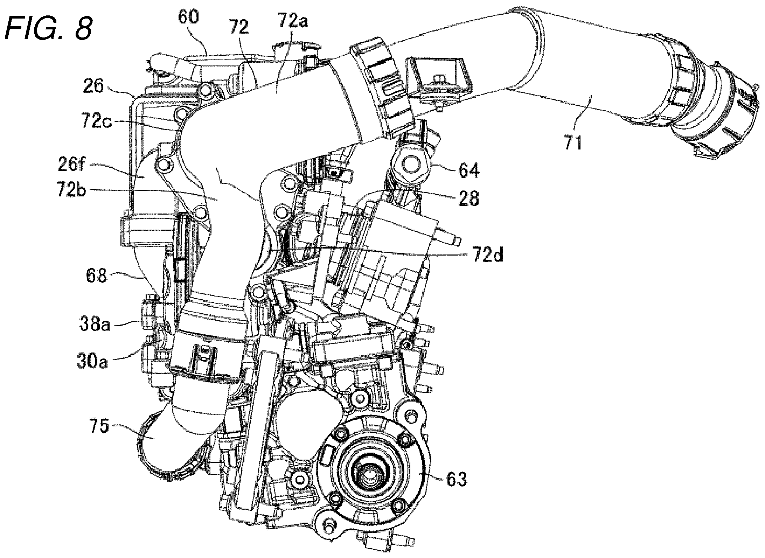

As illustrated in Figs. 4 and 8, the turbo downstream pipe 71 is particularly connected to the branch pipe 72 disposed behind the intercooler 26. The branch pipe 72 includes a lateral pipe portion 72a that is connected to the turbo downstream pipe 71 and extends in the engine width direction and a vertical pipe portion 72b that is continued from the lateral pipe portion 72a and extends downward. An upper connection portion 72c having a connection opening that opens to the intercooler 26 (opens to the front side F in the cylinder row direction D) is provided at the upper end of the vertical pipe portion 72b.

As illustrated in Figs. 4 and 8, a lower connection portion 72d having a connection opening that opens to the manifold 27 (opens to the front side F in the cylinder row direction D) is particularly provided below the upper connection portion 72c of the vertical pipe portion 72b.

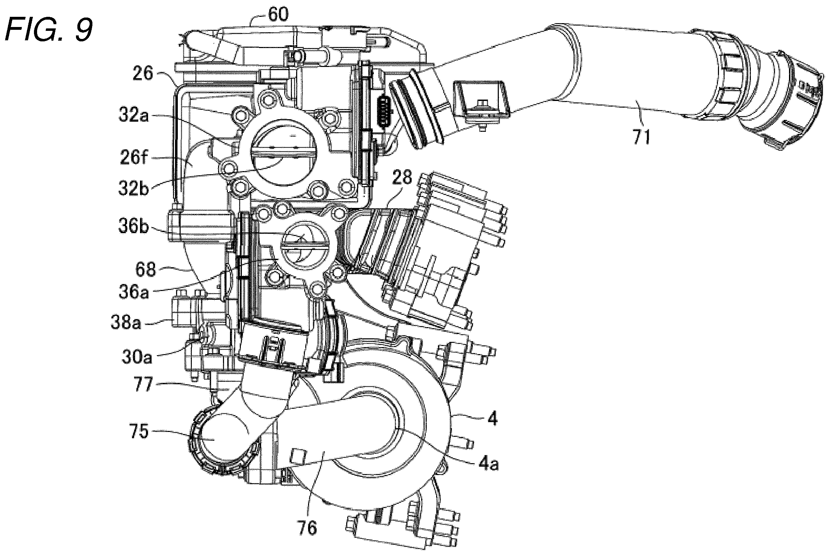

As illustrated in Figs. 2 and 4, the upper connection portion 72c of the branch pipe 72 is connected to the connection part 26d having the first intake inflow opening 26a at the rear end of the intercooler 26 via a cylindrical valve body 32a of the cooler side first flow rate regulating valve 32. The valve body 32a is provided with an actuator 32c that drives an internal butterfly valve 32b (see Fig. 9) .

The turbo downstream pipe 71, the lateral pipe portion 72a and the upper connection portion 72c of the branch pipe 72, and the valve body 32a of the cooler side first flow rate regulating valve 32 particularly form a turbo downstream passage 31 that guides the intake air from the turbocharger 3 to the intercooler 26.

The turbo downstream passage 31 is connected to the first intake inflow opening 26a of the intercooler 26 from one side (rear side) in the cylinder row direction D by the upper connection portion 72c of the branch pipe 72 and the valve body 32a of the cooler side first flow rate regulating valve 32. As illustrated in Fig. 7, the first intake inflow opening 26a of the intercooler 26 is disposed on one side (rear side) in the cylinder row direction D of the tank side outflow opening 44 of the manifold 27. That is, the turbo downstream passage 31 is connected to the first intake inflow opening 26a of the intercooler 26 on one side (rear side) in the cylinder row direction D of the tank side outflow opening 44 of the manifold 27.

### (About the cooler downstream passage 34)

As illustrated in Fig. 4, the cooler downstream pipe 73 is particularly connected to the connection portion 26e, provided at the front end in the cylinder row direction D, that has the intake outflow opening 26c (see Fig. 1) of the intercooler 26. The cooler downstream pipe 73 particularly extends downward and is connected to the front end portion having the cooler side introduction opening 41 (see Fig. 5) of the manifold 27. The cooler downstream pipe 73 forms the cooler downstream passage 34 that guides the intake air from the intercooler 26 to the manifold 27. The cooler downstream passage 34 is particularly connected to the cooler side introduction opening 41 of the manifold 27 by the cooler downstream pipe 73 from the other side (front side) in the cylinder row direction D. As illustrated in Fig. 5, the cooler side introduction opening 41 of the manifold 27 is disposed on the other side (front side) in the cylinder row direction D of the tank side outflow opening 44. That is, the cooler downstream passage 34 is connected to the cooler side introduction opening 41 on the other side (front side) in the cylinder row direction D of the tank side outflow opening 44 of the manifold 27.

### (About the first cooler bypass passage 35)

As illustrated in Fig. 4, the lower connection portion 72d of the branch pipe 72 is particularly connected to the rear end portion in which the first bypass side introduction opening introduction opening 42 (see Fig. 5) of the manifold 27 is provided via the cylindrical valve body 36a (see Fig. 9) of the bypass side first flow rate regulating valve 36, as in the upper connection portion 72c. The valve body 36a is provided with the actuator 36c that drives the internal butterfly valve 36b (see Fig. 9).

The upstream portion of the vertical pipe portion 72b of the branch pipe 72, the lower connection portion 72d of the branch pipe 72, and the valve body 36a of the bypass side first flow rate regulating valve 36 form the first cooler bypass passage 35 that is branched from the turbo downstream passage 31 and guides the intake air to the manifold 27 while bypassing the intercooler 26. The vertical pipe portion 72b of the branch pipe 72 that forms the first cooler bypass passage 35 is provided so as to overlap with the intercooler 26 and the manifold 27 as seen in the cylinder row direction D (as seen from the vehicle rear side) as illustrated in Fig. 8.

The first cooler bypass passage 35 is particularly connected to the first bypass side introduction opening 42 (see Fig. 6) of the manifold 27 from one side (rear side) in the cylinder row direction D by the lower connection portion 72d of the branch pipe 72 and the valve body 36a of the bypass side first flow rate regulating valve 36.

In addition, as illustrated in Fig. 4, the first cooler bypass passage 35 is particularly branched from the turbo downstream passage 31 on one side (rear side) in the cylinder row direction D of the tank side outflow opening 44 of the manifold 27. As illustrated in Fig. 6, the first bypass side introduction opening 42 of the manifold 27 is particularly disposed on one side (rear side) in the cylinder row direction D of the tank side outflow opening 44. That is, the first cooler bypass passage 35 is connected to the first bypass side introduction opening 42 of the manifold 27 on one side (rear side) in the cylinder row direction D of the tank side outflow opening 44 of the manifold 27.

As illustrated in Fig. 7, the first intake inflow opening 26a of the intercooler 26 and the first bypass side introduction opening 42 of the manifold 27 are particularly disposed close to each other vertically and both open to one side (that is, the rear side R) in the cylinder row direction D. Accordingly, as illustrated in Fig. 9, the valve body 32a of the cooler side first flow rate regulating valve 32 close to the intercooler 26 and the valve body 36a of the bypass side first flow rate regulating valve 36 close to the manifold 27 are disposed close to each other vertically and both open to one side (that is, the rear side R) in the cylinder row direction D.

### (About the electric supercharging passage 33)

As illustrated in Fig. 4, the lower end of the branch pipe 72 is particularly connected to a bent pipe 75, which extends downward and is curved toward the front side. The bent pipe 75 is particularly connected to a front extension pipe 76 extending forward. The front end portion of the front extension pipe 76 is particularly curved toward the engine block 1 and connected to an intake air introduction opening portion 4a of the electric supercharger 4. A passage member 77 that extends to the rear side above the front extension pipe 76 is connected to the intake outflow opening portion 4b of the electric supercharger 4.

A compressor that pressurizes (compresses) the intake air is provided between the intake introduction opening portion 4a and the intake outflow outlet portion 4b of the electric supercharger 4. The electric supercharger 4 is provided with an actuator 4c that drives the compressor. The passage member 77 is formed in a gutter shape with an open upper surface.

The lower end of the passage forming portion 68 having the independent passage 66 (see Fig. 7) of the manifold 27 is connected to the upper surface of the rear portion of the passage member 77 via the cylindrical valve body 30a of the cooler side second flow rate regulating valve 30. The valve body 30a is provided with an actuator that drives the internal butterfly valve. The valve body 30a extends in the vertical direction. As illustrated in Fig. 7, the upper end of the passage forming portion 68 of the manifold 27 is connected to the connection part 26f having the second intake inflow opening 26b (see Fig. 1) of the intercooler 26.

The downstream portion of the vertical pipe portion 72b of the branch pipe 72, the bent pipe 75, the front extension pipe 76, the passage member 77, the valve body 30a of the cooler side second flow rate regulating valve 30, and the passage forming portion 68 of the manifold 27 form an electric supercharging passage 33 that is particularly branched from the first cooler bypass passage 35, has the downstream end connected to the second intake inflow opening 26b of the intercooler 26, and has the electric supercharger 4. Of the electric supercharging passage 33, the downstream portion of the vertical pipe portion 72b of the branch pipe 72, the bent pipe 75, and the front extension pipe 76 form the electric upstream passage 33a. Of the electric supercharging passages 33, the passage member 77, the valve body 30a of the cooler side second flow rate regulating valve 30, and the passage forming portion 68 of the manifold 27 form the electric downstream passage 33b.

### (Passage from the turbocharger 3 to the electric supercharger 4)

The passage (the turbo downstream pipe 71, the vertical pipe portion 72b of the branch pipe 72, the bent pipe 75, and the front extension pipe 76) from the turbocharger 3 to the electric supercharger 4 particularly extends from the exhaust side to the intake side above the cylinder head 6 (not illustrated in Fig. 2) of the engine block 1 on one side (rear side) in the cylinder row direction D of the intercooler 26 by the turbo downstream pipe 71, as illustrated in Fig. 2. Then, as illustrated in Figs. 4 and 8, the passage from the turbocharger 3 to the electric supercharger 4 extends downward on one side (rear side) in the cylinder row direction D of the intercooler 26 and the manifold 27 in the upstream portion of the bent pipe 75 and the vertical pipe portion 72b of the branch pipe 72. Then, as illustrated in Fig. 4, the passage from the turbocharger 3 to the electric supercharger 4 extends to the other side (front side) in the cylinder row direction D toward the electric supercharger 4 by the downstream portion of the bent pipe 75 and the upstream portion of the front extension pipe 76. Then, as illustrated in Fig. 9, the passage from the turbocharger 3 to the electric supercharger 4 extends to the engine block 1 (the right side in Fig. 9) toward the intake air introduction opening portion 4a of the electric supercharger 4 by the downstream portion of the front extension pipe 76.

### (About the electric downstream passage 33b)

As illustrated in Fig. 4, the electric downstream passage 33b particularly extends from the intake outflow opening portion 4b of the electric supercharger 4 to one side in the cylinder row direction D, that is, the rear side R by the passage member 77 (referred to below as the "horizontal extension portion 77"). The valve body 30a of the cooler side second flow rate regulating valve 30 is connected to the upper surface of the rear portion of the passage member (horizontal extension portion) 77. The electric downstream passage 33b extends in the vertical direction by the valve body 30a (referred to below as the "cooler side vertical extension portion 30a") of the cooler side second flow rate regulating valve 30. Specifically, the valve body (cooler side vertical extension portion) 30a of the cooler side second flow rate regulating valve 30 extends upward from the upper surface of the rear portion of the passage member (horizontal extension portion) 77 and is connected to the lower end of the passage forming portion 68 (independent passage 66) of the manifold 27.

As illustrated in Fig. 4, the electric downstream passage 33b particularly extends to one side (rear side) in the cylinder row direction D of the tank side outflow opening 44 of the manifold 27. Here, the second intake inflow opening 26b (see Fig. 1) of the intercooler 26 is particularly disposed on one side (rear side) in the cylinder row direction D of the tank side outflow opening 44 of the manifold 27. That is, the electric downstream passage 33b is connected to the second intake inflow opening 26b (see Fig. 1) of the intercooler 26 on one side (rear side) in the cylinder row direction D of the tank side outflow opening 44.

### (About the second cooler bypass passage 37)

As illustrated in Fig. 4, the projecting portion 65 having the second bypass side introduction opening 43 (see Fig. 7) of the manifold 27 is particularly connected to the upper surface of the front portion of the passage member 77 connected to the intake outflow opening portion 4b of the electric supercharger 4 via the cylindrical valve body 38a of the bypass side second flow rate regulating valve 38. The valve body 38a is provided with an actuator 38b that drives an internal butterfly valve (not illustrated).

The valve body 38a of the bypass side second flow rate regulating valve 38 particularly forms the second cooler bypass passage 37 that guides the intake air to the downstream side (that is, to the manifold 27 from the electric downstream passage 33b while bypassing the intercooler 26) of the electric supercharger 4 in the electric supercharging passage 33.

The second cooler bypass passage 37 is branched from the passage member (horizontal extension portion) 77 by the valve body 38a (referred to below as the "bypass side vertical extension portion 38a") of the bypass side second flow rate regulating valve 38 and extends in the vertical direction. Specifically, the valve body (bypass side vertical extension portion) 38a of the bypass side second flow rate regulating valve 38 extends upward from the upper surface of the front portion of the passage member (horizontal extension portion) 77 and is connected to the second bypass side introduction opening 43 (see Fig. 7) at the lower end of the projecting portion 65 of the manifold 27.

As illustrated in Fig. 4, the second cooler bypass passage 37 is particularly branched from the electric downstream passage 33b on one side (rear side) in the cylinder row direction D of the tank side outflow opening 44. Here, as illustrated in Fig. 6, the second bypass side introduction opening 43 of the manifold 27 is particularly disposed on one side (rear side) in the cylinder row direction D of the tank side outflow opening 44. That is, the second cooler bypass passage 37 is connected to the second bypass side introduction opening 43 (see Fig. 6) of the manifold 27 on one side (rear side) in the cylinder row direction D of the tank side outflow opening 44 of the manifold 27.

### (About the relationship between the electric downstream passage 33b and the second cooler bypass passage 37)

As illustrated in Fig. 4, the electric downstream passage 33b and the second cooler bypass passage 37 are arranged in the cylinder row direction D on the intake side of the engine block 1. Specifically, the valve body (cooler side vertical extension portion) 30a of the cooler side second flow rate regulating valve 30 and the valve body (bypass side vertical extension portion) 38a of the bypass side second flow rate regulating valve 38 are arranged in the cylinder row direction D on the intake side of the engine block 1. As illustrated in Fig. 8, the valve body (cooler side vertical extension portion) 30a of the cooler side second flow rate regulating valve 30 and the valve body (bypass side vertical extension portion) 38a of the bypass side second flow rate regulating valve 38 are disposed so that at least parts thereof overlap with each other as seen in the cylinder row direction (as seen from the rear side of the vehicle).

As illustrated in Fig. 7, an opening 68a at the lower end of the passage forming portion 68 (independent passage 66) of the manifold 27 and the second bypass side introduction opening 43 at the lower end of the projecting portion 65 of the manifold 27 are particularly disposed close to each other in the cylinder row direction D and are both open downward. Accordingly, as illustrated in Fig. 4, the valve body (cooler side vertical extension portion) 30a of the cooler side second flow rate regulating valve 30 and the valve body (bypass side vertical extension portion) 38a of the bypass side second flow rate regulating valve 38 are disposed close to each other in the cylinder row direction D and are both open downward to face the upper surface of the passage member (horizontal extension portion) 77.

As illustrated in Fig. 4, the second cooler bypass passage 37 is particularly disposed on the other side (front side) in the cylinder row direction D of the electric downstream passage 33b. That is, the second cooler bypass passage 37 is particularly disposed closer to the tank side outflow opening 44 of the manifold 27 than the electric downstream passage 33b in the cylinder row direction D, that is, disposed near the tank side outflow opening 44. Specifically, the valve body (bypass side vertical extension portion) 38a of the bypass side second flow rate regulating valve 38 is disposed closer to the tank side outflow opening 44 of the manifold 27 in the cylinder row direction D than the valve body (cooler side vertical extension portion) 30a of the cooler side second flow rate regulating valve 30, that is, disposed near the tank side outflow opening 44.

### (About the relationship between the first cooler bypass passage 35 and the second cooler bypass passage 37)

As illustrated in Fig. 4, the passage length of the passage that extends from the second branch portion X2 of the second cooler bypass passage 37 to the surge tank 28 while bypassing the intercooler 26 is particularly shorter than the passage length of the passage that extends from the first branch portion X1 of the first cooler bypass passage 35 to the surge tank 28 by bypassing the intercooler 26.

In addition, as illustrated in Fig. 4, the distance between the bypass side second flow rate regulating valve 38 of the second cooler bypass passage 37 and the tank side outflow opening 44 of the manifold 27 is particularly shorter than the distance between the bypass side first flow rate regulating valve 36 of the first cooler bypass passage 35 and the tank side outflow opening 44 of the manifold 27.

As illustrated in Fig. 6, in the manifold 27, the second bypass side introduction opening 43 is particularly disposed on the other side (front side) in the cylinder row direction D of the first bypass side introduction opening 42. In other words, in the manifold 27, the second bypass side introduction opening 43 is disposed between the first bypass side introduction opening 42 and the tank side outflow opening 44 in the cylinder row direction D. That is, in the manifold 27, the distance between the second bypass side introduction opening 43 and the tank side outflow opening 44 is shorter than the distance between the first bypass side introduction opening 42 and the tank side outflow opening 44.

### (Description of the supercharging path)

When the cooler side first flow rate regulating valve 32 of the turbo downstream passage 31 is opened and the bypass side first flow rate regulating valve 36 of the first cooler bypass passage 35 is closed, the intake path when the electric supercharger 4 does not operate is as follows. The intake air pressurized by the turbocharger 3 flows into the surge tank 28 through the turbo downstream passage 31, the intercooler 26, the cooler downstream passage 34, and the cooler side passage 45 of the cooler side pipe portion 27a of the manifold 27, and then sucked into the engine block 1. This intake path is referred to below as the "first supercharging path (from turbocharger through cooler)".

When the bypass side first flow rate regulating valve 36 of the first cooler bypass passage 35 is opened while the intake air is sucked into the engine block 1 through the first supercharging path (from turbocharger through cooler), the following intake path is generated. Part of the intake air pressurized by the turbocharger 3 flows into the surge tank 28 through the first cooler bypass passage 35 branched from the turbo downstream passage 31 and the bypass side passage 46 of the bypass side pipe portion 27b of the manifold 27, and sucked into the engine block 1. This intake path is referred to below as the "second supercharging path (from turbocharger bypassing cooler)".

In the manifold 27, the intake air that flows into the cooler side passage 45 through the intercooler 26 and the intake air that flows into the bypass side passage 46 while bypassing the intercooler 26 merge at the intersection of both passages 45 and 46 and then flow into the surge tank 28 from the tank side outflow opening 44.

The mixing ratio of the intake air passing through the intercooler 26 and the intake air bypassing the intercooler 26 can be adjusted by the openings of the cooler side first flow rate regulating valve 32 and the bypass side first flow rate regulating valve 36. When the cooler side first flow rate regulating valve 32 is closed, the entire amount of the intake air pressurized by the turbocharger 3 flows into the surge tank 28 while bypassing the intercooler 26.

The following describes the path of the intake air when the cooler side second flow rate regulating valve 30 of the electric downstream passage 33b is opened and the cooler side first flow rate regulating valve 32 of the turbo downstream passage 31, the bypass side first flow rate regulating valve 36 of the first cooler bypass passage 35, and the bypass side second flow rate regulating valve 38 of the second cooler bypass passage 37 are closed, and the electric supercharger 4 is operated. The intake air pressurized by the turbocharger 3 passes through the electric upstream passage 33a of the electric supercharging passage 33 branched from the first cooler bypass passage 35, is further pressurized by the electric supercharger 4, passes through the electric downstream passage 33b of the electric supercharging passage 33, the intercooler 26, the cooler downstream passage 34, and the cooler side passage 45 of the cooler side pipe portion 27a of the manifold 27, flows into the surge tank 28, and is sucked into the engine block 1. This intake path is referred to below as the "third supercharging path (from electric supercharger through cooler)".

When the cooler side first flow rate regulating valve 32 of the turbo downstream passage 31 is closed, the intake air is prevented from flowing back to the turbo downstream passage 31.

When the bypass side second flow rate regulating valve 38 of the second cooler bypass passage 37 is opened while the intake air is sucked into the engine block 1 through the third supercharging path (from electric supercharger through cooler), the following intake path is generated. Part of the intake air further pressurized by the electric supercharger 4 flows into the surge tank 28 through the second cooler bypass passage 37 and the bypass side passage 46 of the bypass side pipe portion 27b of the manifold 27, and is sucked into the engine block 1. This intake path is referred to below as the "fourth supercharging path (from electric supercharger bypassing cooler)".

In the manifold 27, the intake air that flows into the cooler side passage 45 through the intercooler 26 and the intake air that bypasses the intercooler 26 and flows into the bypass side passage 46 merge at the intersection of both passages 45 and 46 and then flow into the surge tank 28 from the tank side outflow opening 44.

The mixing ratio of the intake air passing through the intercooler 26 and the intake air bypassing the intercooler 26 can be adjusted by the openings of the cooler side second flow rate regulating valve 30 and the bypass side second flow rate regulating valve 38. When the cooler side second flow rate regulating valve 30 is closed, the entire amount of the intake air pressurized by the electric supercharger 4 flows into the surge tank 28 while bypassing the intercooler 26.

### (Layout of intake system components and effect of piping)

In the engine intake structure according to the embodiment, the intercooler 26, the manifold 27, and the electric supercharger 4 are stacked vertically in three layers on the intake side of the engine block 1 with the manifold 27 disposed in the middle. Accordingly, the intercooler 26, the manifold 27, and the electric supercharger 4 are advantageously prevented from significantly overhanging laterally from the engine block 1.

In addition, in the engine intake structure according to the embodiment, the first bypass side introduction opening 42 of the manifold 27 opens to one side (rear side) in the cylinder row direction D. The second bypass side introduction opening 43 of the manifold 27 opens downward (one side in the vertical direction) where the electric supercharger 4 is located. This makes the second cooler bypass passage 37 to be easily extended to the lower side (one side in the vertical direction) of the manifold 27 and the first cooler bypass passage 35 to be easily extended to one side (rear side) in the cylinder row direction D of the manifold 27. Accordingly, the first cooler bypass passage 35 and the second cooler bypass passage 37 can be extended without intersecting each other on the intake side of the engine block 1.

That is, the plurality of bypass passages (the first cooler bypass passage 35 and the second cooler bypass passage 37) that guide the intake air from the turbocharger 3 and the electric supercharger 4 to the cylinders 2 of the engine while bypassing the intercooler 26 can be provided compactly without significantly overhanging laterally from the engine block 1.

Accordingly, even when the plurality of bypass passages (the first cooler bypass passage 35 and the second cooler bypass passage 37) is extended on the intake side of the engine block 1, these passages are advantageously prevented from interfering with the wall portion of the engine room or components such as the engine mount.

By using the upper side or the lower side of the intercooler 26 to dispose the manifold 27 and the surge tank 28 and directly connecting the manifold 27 to the surge tank 28, both the manifold 27 and the surge tank 28 can be disposed compactly on the side of the engine block 1.

Since the electric downstream passage 33b and the second cooler bypass passage 37 are arranged in the cylinder row direction D, the electric downstream passage 33b and the second cooler bypass passage 37 are advantageously prevented from significantly overhanging laterally from the engine block 1.

Since the valve body (cooler side vertical extension portion) 30a of the cooler side second flow rate regulating valve 30 and the valve body (bypass side vertical extension portion) 38a of the bypass side second flow rate regulating valve 38 extend along the side surface on the intake side of the engine block 1, the electric downstream passage 33b and the second cooler bypass passage 37 are more advantageously prevented from significantly overhanging laterally from the engine block 1.

Since the valve body (cooler side vertical extension portion) 30a of the cooler side second flow rate regulating valve 30 and the valve body (bypass side vertical extension portion) 38a of the bypass side second flow rate regulating valve 38 overlap with each other as seen in the cylinder row direction D (see Fig. 8), the electric downstream passage 33b and the second cooler bypass passage 37 are more advantageously prevented from significantly overhanging laterally from the engine block 1.

The passage member (horizontal extension portion) 77 extending in the cylinder row direction D makes the valve body (cooler side vertical extension portion) 30a of the cooler side second flow rate regulating valve 30 and the valve body (bypass side vertical extension portion) 38a of the bypass side second flow rate regulating valve 38 to be easily arranged in the cylinder row direction D.

The passage (the turbo downstream pipe 71, the vertical pipe portion 72b of the branch pipe 72, the bent pipe 75, and the front extension pipe 76) from the turbocharger 3 to the electric supercharger 4 extends along the side surface of the engine block 1 on the intake side of the engine block 1. This advantageously prevents the passage from the turbocharger 3 to the electric supercharger 4 from significantly overhanging laterally from the engine block 1. Accordingly, the entire intake passage of the engine is more compact advantageously.

The turbo downstream passage 31 extends from the engine exhaust side to the rear side of the intercooler 26 while the bent pipe 75, the front extension pipe 76, the passage member 77, the cooler side second flow rate regulating valve 30, and the bypass side second flow rate regulating valve 38 are disposed in the piping space behind the electric supercharger 4 below the manifold 27. That is, the branch pipe 72 is extended downward without significantly overhanging laterally from the engine block 1 and the bent pipe 75, the front extension pipe 76, the passage member 77, the cooler side second flow rate regulating valve 30, and the bypass side second flow rate regulating valve 38 are disposed along or in proximity to the side surface of the engine intake side. This advantageously makes the entire engine compact.

When the engine block 1 is disposed longitudinally as in the embodiment, the space between the side surface on the intake side of the engine block 1 and the wall portion of the engine room, specifically the space between the side surface on the intake side of the engine block 1 and the side wall in the vehicle width direction is often narrower than when the engine block 1 is disposed transversely. In addition, components such as the engine mount are often disposed between the side surface on the intake side of the engine block 1 and the side wall in the vehicle width direction of the engine room. That is, in the longitudinal engine, the plurality of bypass passages (the first cooler bypass passage 35 and the second cooler bypass passage 37) needs to be provided without significantly overhanging laterally (that is, overhanging to the outer side in the vehicle width direction) from the engine block 1 to suppress interference with the side wall, the components, and the like as compared with the transverse engine.

Accordingly, by adopting the intake structure described above, the first cooler bypass passage 35 and the second cooler bypass passage 37 can be provided compactly without significantly overhanging to the outer side in the vehicle width direction. Accordingly, even when the engine block 1 is disposed longitudinally and the space between the side surface on the intake side of the engine block 1 and the side wall in the vehicle width direction of the engine room is narrowed, the plurality of bypass passages (the first cooler bypass passage 35 and the second cooler bypass passage 37) can be easily provided on the intake side of the engine block 1.

### (Other embodiments)

Although the manifold 27 is disposed below the intercooler 26 in the embodiment described above, the manifold 27 may be disposed above the intercooler 26.

Although the electric supercharger 4 is disposed below the intercooler 26 with the manifold 27 sandwiched therebetween on the intake side of the engine block 1 in the embodiment described above, the present invention is not limited to this example. The electric supercharger 4 may be disposed above the intercooler 26 with the manifold 27 sandwiched therebetween on the intake side of the engine block 1. In this case, the second bypass side introduction opening 43 of the manifold 27 opens upward.

### [Description of Reference Signs and Numerals]

D: cylinder row direction
R: rear side (one side in cylinder row direction)
F: front side (the other side in cylinder row direction)
1: engine block
2: cylinder
3: turbocharger
4: electric supercharger
26: intercooler
27: manifold
28: surge tank
30: cooler side second flow rate regulating valve
30a: valve body (cooler side vertical extension portion)
31: turbo downstream passage
33b: electric downstream passage
34: cooler downstream passage
35: first cooler bypass passage
37: second cooler bypass passage
38: bypass side second flow rate regulating valve
38a: valve body (bypass side vertical extension portion)
41: cooler side introduction opening
42: first bypass side introduction opening
43: second bypass side introduction opening
44: tank side outflow opening
77: passage member (horizontal extension portion)

## Claims

1. An engine intake structure comprising:
a turbocharger (3) provided on an exhaust side of a multi-cylinder engine block (1);
an electric supercharger (4) provided on an intake side of the engine block (1);
an intercooler (26) provided on the intake side of the engine block (1);
a surge tank (28) connected via an independent intake passage (29) to each of cylinders (2) which are provided inline in the engine block (1);
a manifold (27) configured to guide intake air passing through the intercooler (26) and intake air bypassing the intercooler (26) to the surge tank (28);
a first cooler bypass passage (35) that is branched from a turbo downstream passage (31) and is configured to guide intake air to the manifold (27) while bypassing the intercooler (26), wherein the turbo downstream passage (31) is configured to guide the intake air from the turbocharger (3) to the intercooler (26); and
a second cooler bypass passage (37) that is branched from an electric downstream passage (33b) and is configured to guide the intake air to the manifold (27) while bypassing the intercooler (26), wherein the electric downstream passage (33b) is configured to guide the intake air from the electric supercharger (4) to the intercooler (26),
wherein the manifold (27) has a cooler side introduction opening (41) to which a cooler downstream passage (34) that guides the intake air from the intercooler (26) to the manifold (27) is connected, a first bypass side introduction opening (42) to which the first cooler bypass passage (35) is connected, a second bypass side introduction opening (43) to which the second cooler bypass passage (37) is connected, and a tank side outflow opening (44) connected to the surge tank (28),
the intercooler (26) and the manifold (27) are disposed so that at least parts of the intercooler (26) and the manifold (27) vertically overlap with each other on the intake side of the engine block (1),
the electric supercharger (4) is disposed on one side in a vertical direction of the intercooler (26) with the manifold (27) sandwiched therebetween, and the electric supercharger (4) is disposed on the intake side of the engine block (1),
the first bypass side introduction opening (42) is configured to open to one side in a cylinder row direction (D) of the engine block (1), and
the second bypass side introduction opening (43) is configured to open to one side in the vertical direction.

2. The engine intake structure according to claim 1,
wherein the surge tank (28) is disposed between a side surface on the intake side of the engine block (1) and the manifold (27), and/or
the tank side outflow opening (44) is configured to open to the surge tank (28).

3. The engine intake structure according to claim 1 or 2,
wherein the electric downstream passage (33b) and the second cooler bypass passage (37) are arranged in the cylinder row direction (D).

4. The engine intake structure according to any one of the preceding claims,
wherein the electric downstream passage (33b) has a cooler side vertical extension portion (30a) configured to extend in the vertical direction,
the second cooler bypass passage (37) has a bypass side vertical extension portion (38a) configured to extend in the vertical direction, and
the cooler side vertical extension portion (30a) and the bypass side vertical extension portion (38a) are arranged in the cylinder row direction (D).

5. The engine intake structure according to claim 4,
wherein the cooler side vertical extension portion (30a) and the bypass side vertical extension portion (38a) are disposed so that at least parts thereof overlap with each other as seen in the cylinder row direction (D).

6. The engine intake structure according to claim 4 or 5,
wherein the electric downstream passage (33b) has a horizontal extension portion (77) configured to extend in the cylinder row direction (D) from the electric supercharger (4) and is connected to the cooler side vertical extension portion (30a), and
particularly the bypass side vertical extension portion (38a) is branched from the horizontal extension portion (77).

7. The engine intake structure according to any one of the preceding claims,
wherein the electric supercharger (4) is disposed below the intercooler (26) with the manifold (27) sandwiched therebetween on the intake side of the engine block (1), and/or
a passage from the turbocharger (3) to the electric supercharger (4) is configured to extend from the exhaust side to the intake side above the engine block (1) on one side in the cylinder row direction (D) of the intercooler (26), configured to extend downward on the one side in the cylinder row direction (D) of the intercooler (26), and configured to extend toward the other side in the cylinder row direction (D) toward the electric supercharger (4).

8. The engine intake structure according to any one of the preceding claims,
wherein the engine block (1) is configured to be disposed longitudinally in which the cylinder row direction (D) coincides with a front and rear direction of a vehicle.

9. An engine comprising:
a multi-cylinder engine block (1); and
the engine intake structure according to any one of the preceding claims.

10. The engine according to claim 9, wherein the engine is an in-line multi-cylinder engine.

11. A vehicle comprising the engine according to claim 9 or 10.

12. The vehicle according to claim 11, wherein the cylinder row direction (D) coincides with a front and rear direction of the vehicle.

13. The vehicle according to claim 12,
wherein the first bypass side introduction opening (42) is configured to open rearward in the front and rear direction of the vehicle.

14. The vehicle according to any one of claims 11 to 13, wherein a cylinder axis direction of the cylinder block (1) coincides with a vertical direction.

15. The vehicle according to any one of claims 11 to 14,
wherein the second bypass side introduction opening (43) is configured to open downward.
